# EUROPÄISCHE PATENTSCHRIFT

(11) **EP 0 849 033 B1**
(45) Veröffentlichungstag und Bekanntmachung des Hinweises auf die Patenterteilung: **14.11.2001**
(21) Anmeldenummer: 97121193.3
(22) Anmeldetag: 03.12.1997
(51) Int. Cl.: B23Q 16/00, B23Q 3/18

(54) **Verfahren zur Bearbeitung und Behandlung eines Werkstückes**
Method for machining and handling a workpiece
Procédé d'usinage et de manipulation d'une pièce

(30) Priorität: 17.12.1996 DE 19652466
(43) Veröffentlichungstag der Anmeldung: 24.06.1998
(73) Patentinhaber: Bayerische Motoren Werke Aktiengesellschaft, 80788 München (DE)
(72) Erfinder: Steinbichler, Rainer, 85716 Unterschleissheim (DE); Gross, Johann, 81475 München (DE); Hense, Paul, 85764 Oberschleissheim (DE)

(56) Entgegenhaltungen:
- DE-A- 2 445 559
- DE-A- 4 020 981
- DE-U- 8 717 403
- GB-A- 1 263 474
- US-A- 4 783 108
- US-A- 5 197 720

## Beschreibung

Die Erfindung bezieht sich nach dem Oberbegriff des Patentanspruches 1 auf ein Verfahren zur Bearbeitung und Behandlung eines Werkstückes, bei dem das durch einen mehrachsigen Industrieroboter mittels einer Greifeinrichtung aus einer Bereitstellungsanordnung einer Bearbeitungsmaschine zugeführte Werkstück unter Verbleib an der Greifeinrichtung während der Bearbeitung in Position gehalten wird, wobei der Industrieroboter während der Bearbeitung relativ zur Bearbeitungsmaschine über eine zwischen der Greifeinrichtung und einer Positionier-Vorrichtung wirksamen Zapfen-/Bohrungs-Paarung fixiert ist und auf eine Bearbeitungsstation zur Durchführung dieses Verfahrens.

Aus der US 4 562 391 ist ein mehrachsiger Industrieroboter bekannt, der am freien Ende seines Schwenkarmes eine Bearbeitungsmaschine trägt zur Bearbeitung eines auf einer Spannplatte fixierten Werkstückes. Zur genauen Zuordnung eines Erodier-Werkzeuges zu dem Werkstück ist die Bearbeitungsmaschine mit einer Führungsplatte mit Paßbohrungen ausgerüstet, die mit auf der Spannplatte des Werkzeuges angeordneten Führungszapfen zur Positionierung des Erodier-Werkzeuges relativ zum Werkstück zusammenwirken. Nachteilig hierbei ist die Anordnung der relativ schwergewichtigen Erodier-Maschine am freien Arm des Industrieroboters, der damit relativ aufwendig gestaltet werden muß.

Aus der US 4 919 586 ist ein Bearbeitungs- und Positionierungs-System für ein an einem freien Ende eines Roboterarmes vorgesehenen Werkzeuges bekannt, wobei zur Positionierung des Werkzeuges relativ zu einem fix angeordneten Werkstück der Roboterarm über in Bohrungen der Werkstückauflage formschlüssig eingreifende Zapfen während der Werkstückbearbeitung lagegesichert ist.

Weiter zeigt die gattungsbildende DE-A 24 45 559 einen zur Bearbeitung eines Werkstückes verwendeten, mehrachsigen Industrieroboter, dessen das Werkstück während der Bearbeitung haltende Greifeinrichtung in einer Positionier-Vorrichtung fixiert ist. Durch diese mittels einer Zapfen-/Loch-Paarung erzielte Fixierung der Greifeinrichtung ist jedoch das Werkstück während der Bearbeitung relativ zur Bearbeitungsmaschinen-Unterlage lediglich durch die Greifeinrichtung gehalten, nicht aber lagegesichert. Die DE-A 24 45 559 offenbart das verfahren gemäß dem Oberbegriff des unabhängigen Anspruchs 1 und eine Bearbeitungsstation zur Durchführung des Verfahrens mit den Merkmalen des Oberbegriffes des Anspruchs 3. Zur Vermeidung dieses Nachteiles wurde in der P 195 25 701 daher vorgeschlagen, daß der Industrieroboter über das in einer der Bearbeitungsmaschine zugeordneten Positionier-Vorrichtung positionierte Werkstück relativ zur Bearbeitungsmaschine fixiert wird, wobei das mit ersten Elementen (z.B. Paßbohrungen) einer Schiebepassungs-Paarung ausgebildete Werkstück über zweite, korrespondierende Elemente (z.B. Paß-Zapfen) der Schiebepassungs-Paarung in der Vorrichtung positioniert wird und zur Fixierung des Industrieroboters das an dessen Greifeinrichtung gehaltene Werkstück in Schiebepassungs-Richtung während jeder Bearbeitung in der aus Industrieroboter, Bearbeitungsmaschine und Positionier-vorrichtung gebildeten Bearbeitungsstation spielfrei gegen einen passungsnahen Anschlag gehalten wird.

Der vorbeschriebene Vorschlag setzt voraus, daß das Werkstück ausreichende und geeignete Passungsbohrungen und/oder Passungsstifte aufweist zur Positionierung an der Positioniervorrichtung, wobei diese Zapfen-/Bohrungs-Paarungen einen für das Handling durch den Roboter geeigneten Durchmesser aufweisen sollen. In Verbindung mit dieser Positionierung durch das Werkstück selbst ist ferner erforderlich, daß das Werkstück von hoher Steifigkeit ist, um beim Positionieren an der Positionier-Vorrichtung ein Klemmen in der jeweiligen Zapfen-Bohrungs-Paarung zu vermeiden.

Der Erfindung liegt die Aufgabe zugrunde, das gattungsgemäße Verfahren derart auszugestalten, daß am Werkstück vorhandene Paßeinrichtungen lediglich zur mittelbaren Positionierung des Werkstückes relativ zur Bearbeitungsmaschine dienen, und eine Bearbeitungsstation zur Durchführung dieses Verfahrens anzugeben.

Diese Aufgabe ist mit dem unabhängigen Verfahrensanspruch 1 gelöst, wobei das Werkstück relativ zur Greifeinrichtung über an einer Grundplatte angeordnete, mit Paßeinrichtungen des Werkstückes zusammenwirkende Haltemittel positioniert wird, und die Greifeinrichtung ferner mit ersten Elementen (z.B. Paßbuchsen) einer Schiebepassungs-Paarung über zweite, korrespondierende Elemente (z.B. Paß-Zapfen) der Schiebepassungs-Paarung in der Vorrichtung positioniert wird, wobei zur Fixierung des Industrieroboters die das Werkstück tragende Greifeinrichtung in Schiebepassungs-Richtung während jeder Bearbeitung in der aus Industrieroboter, Bearbeitungsmaschine und Positionier-Vorrichtung gebildeten Bearbeitungsstation spielfrei gegen einen passungsnahen Anschlag gehalten wird.

Eine Bearbeitungsstation zur Durchführung dieses Verfahrens ist im Anspruch 3 angegeben.

In den Hilfs-Paßbohrungen eingreifenden, zylindrischen und durch Spannkegel aufgeweiteten Spannzangen gewährleisten einen sicheren Halt des Werkstückes an der Greifeinrichtung in vorteilhafter Weise für ein robustes Handling des Werkstückes durch den Industrieroboter bei der Positionierung.

Das robuste Handling wird in weiterer Ausgestaltung der Erfindung femer dadurch unterstützt, daß die Greifeinrichtung mit an der Grundplatte dem Werkstück benachbart angeordneten Anschlagplatten ausgerüstet ist, die jeweils mit Paßbuchsen als ersten Elementen einer Schiebepassungs-Paarung in den Schmal- und Breitseiten entsprechend den unterschiedlichen Bearbeitungsrichtungen zueinander quergerichtet angeordnet sind.

Der Vorteil dieser Ausgestaltung liegt insbesondere darin, daß die Zapfen-/Bohrungs-Paarungen vorteilhaft groß dimensioniert werden können und weiter im Werkstück für ein Fügen mit anderen Bauteilen vorgesehene Paßeinrichtungen nicht benutzt und damit auch nicht beschädigt werden können.

In weiterer Ausgestaltung der Erfindung sind an der Grundplatte für ein im wesentlichen quaderartiges Werkstück stimseitig benachbart angeordnete Anschlagplatten mit Ausnehmungen vorgesehen für eine stirnseitige Bearbeitung des Werkstückes, was insbesondere durch massiv ausgebildete Zapfen-Bohrungs-Paarungen in vorteilhafter Weise möglich ist und zwar durch Verwendung mehrerer Zapfen-Bohrungs-Paarungen einseitig an der Positionier-Vorrichtung.

Eine im Aufbau einfache Bearbeitungsstation zur Durchführung des erfindungsgemäßen Verfahrens kennzeichnet sich dadurch, daß die Bearbeitungsmaschine aus einer ortsfest angeordneten Trägerplatte für entsprechend einem vorbestimmten Bearbeitungsbild fest angeordnete, gesonderte Bearbeitungseinheiten gebildet ist mit einzeln betreibbaren Werkzeugspindeln, wobei die Trägerplatte mit quer angeordneten Stützplatten mit an den freien Stirnseiten vorgesehenen Anschlägen für die schmal- und/oder breitseitig anschlagenden Anschlagplatten der Greifeinrichtung ausgerüstet ist und mit an den Stützplatten angeordneten Paß-Zapfen als zweite, korrespondierende Elemente einer Schiebepassungs-Paarung die Positionier-Vorrichtung und die Bearbeitungsmaschine eine Einheit bilden.

Mit der im Aufbau vorteilhaft einfachen Bearbeitungsstation der vorbeschriebenen Ausführung kann ein jeweiliges Werkstück spanabhebend bearbeitet werden, insbesondere durch Bohren, Senken, Gewindebohren, Reiben, etc., wobei auch eine nachfolgende Werkstückbehandlung wie Waschen, Spülen, Freiblasen usw. möglich ist.

Zur Schonung der weiter vorne erwähnten zylindrischen Spannzangen einerseits und zur Erzielung einer großen Haltekraft mittels der Spannzangen andererseits bei geringstem Zentrierspiel wird schließlich vorgeschlagen, daß das Werkstück in der Bereitstellungsanordnung über die mit den Spannzangen zusammenwirkenden Hilfs-Paßbohrungen lagegenau positioniert ist.

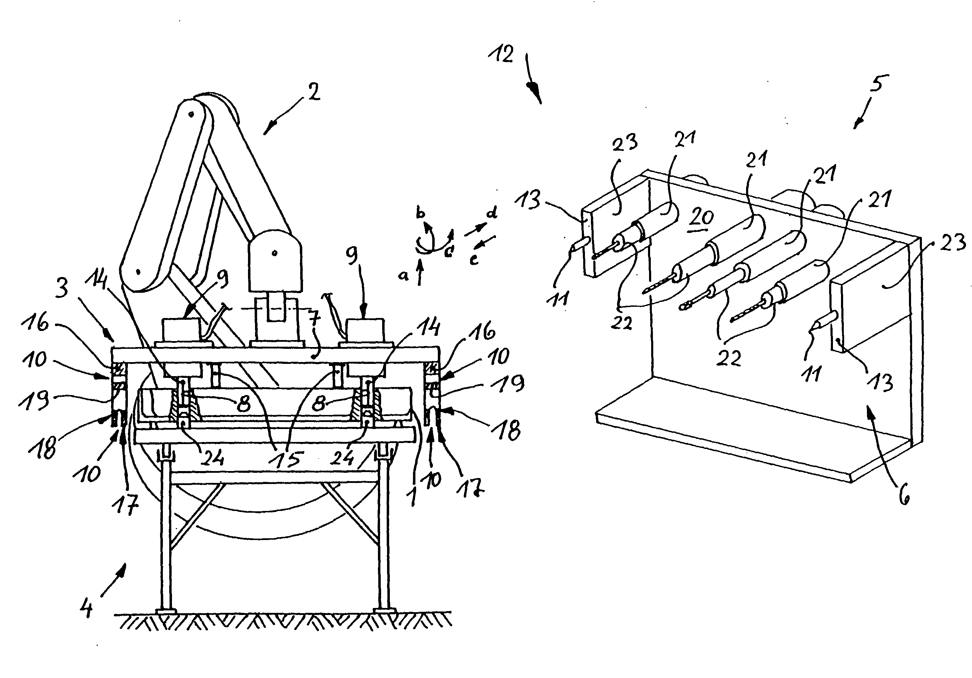

Die Erfindung ist anhand einer in der Zeichnung zur Durchführung des Verfahrens bevorzugten Bearbeitungsstation beschrieben.

Bei einem Verfahren zur vorzugsweise spanabhebenden Bearbeitung eines Werkstückes 1 wird das durch einen mehrachsigen Industrieroboter 2 mittels einer Greifeinrichtung 3 aus einer Bereitstellungsanordnung 4 einer Bearbeitungsmaschine 5 zugeführte Werkstück 1 unter Verbleib an der Greifeinrichtung 3 während der Bearbeitung in Position gehalten, wobei der Roboter 2 während der Bearbeitung relativ zur Bearbeitungsmaschine 5 über einen zwischen der Greifeinrichtung 3 und einer Positionier-Vorrichtung 6 wirksame Zapfen-Bohrungs-Paarung fixiert ist.

Zur Erzielung einer hochbelastbaren Positionierung für ein relativ biegeweiches Werkstück 1 wird dieses relativ zur Greifeinrichtung 3 über an einer Grundplatte 7 angeordnete, mit Hilfs-Paßbohrungen 8 des Werkstückes 1 zusammenwirkende Haltemittel 9 positioniert, wobei die Greifeinrichtung 3 mit ersten, als Paßbuchsen 10 gestalteten Elementen einer Schiebepassungs-Paarung über zweite, korrespondierende und als Paß-Zapfen 11 gestaltete Elemente der Schiebepassungs-Paarung in der Vorrichtung 6 positioniert wird, und ferner zur Fixierung des Roboters 2 die das Werkstück 1 tragende Greifeinrichtung 3 in Schiebepassungs-Richtung während der Bearbeitung in der aus Industrieroboter 2, Bearbeitungsmaschine 5 und Positionier-Vorrichtung 6 gebildeten Bearbeitungsstation 12 spielfrei gegen einen passungsnahen Anschlag 13 der Positionier-Vorrichtung 6 gehalten wird.

Vorzugsweise ist das Werkstück 1 relativ zur Grundplatte 7 der Greifeinrichtung 3 über gesteuert betätigte, in die Hilfs-Paßbohrungen 8 des Werkstückes 1 zur Klemmhalterung eingeführte Spannzangen 14 als Haltemittel 9 positioniert, wobei das Werkstück 1 über Distanzstücke 15 von der Grundplatte 7 beabstandet gehalten ist zur Abführung von Bearbeitungsspänen.

Um eine im Aufbau einfache Greifeinrichtung 3 zu erzielen, ist diese mit an der Grundplatte 7 dem Werkstück 1 beispielsweise stirnseitig benachbart angeordneten Anschlagplatten 16 ausgerüstet, die jeweils mit Paßbuchsen 10 als ersten Elementen einer Schiebepassungs-Paarung in den Schmal- und Breitseiten 17 und 18 entsprechend den unterschiedlichen Bearbeitungsrichtungen zueinander quergerichtet angeordnet sind. Für eine stimseitige Bearbeitung des Werkstückes 1 weisen die Anschlagplatten 16 Ausnehmungen 19 auf.

Zur Vermeidung einer aufwendigen Sondermaschine ist die Bearbeitungsmaschine 5 aus einer ortsfest angeordneten Trägerplatte 20 für entsprechend einem vorbestimmten Bearbeitungsbild bzw. Lochbild im Werkstück 1 fest angeordnete, gesonderte Bearbeitungseinheiten 21 gebildet mit einzeln betreibbaren Werkzeugspindeln 22, wobei die Trägerplatte 20 mit quer angeordneten Stützplatten 23 mit an den freien Stirnseiten vorgesehenen Anschlägen 13 für die schmal- und/oder breitseitig anschlagenden Anschlagplatten 16 der Greifeinrichtung 3 ausgerüstet ist. An den Stützplatten 23 angeordnete Paß-Zapfen 11 als zweite, korrespondierende Elemente einer Schiebepassungs-Paarung mit den Paßbuchsen 10 in/an den Anschlagplatten 16 der Greifeinrichtung 3 ist eine an der Bearbeitungsmaschine 5 integrierte Positionier-Vorrichtung 6 erzielt, womit eine im Aufbau einfache und kostengünstig herstellbare Baueinheit erreicht ist.

Zur schonenden Einführung der Spannzangen 14 in die Hilfs-Paßbohrungen 8 des Werkstückes 1 ist dieses in der Bereitstellungsanordnung 4 über die mit den Spannzangen 14 zusammenwirkenden Hilfs-Paßbohrungen 8 mittels Zentrierzapfen 24 lagegenau positioniert.

Das mittels des Roboters 2 gemäß den Pfeilen a - e relativ zur Bearbeitungsmaschine 5 geführte Werkstück 1 kann im Anschluß an eine spanabhebende Bearbeitung, wie beispielsweise Bohren, Senken, Gewindebohren, Reiben etc. in einer der Bearbeitungsmaschine 5 im Schwenkbereich des Roboters 2 benachbart angeordneten weiteren Station mittels Spülen und/oder Freiblasen der Bohrungen bzw. der bearbeiteten Stellen zusätzlich behandelt werden.

## Patentansprüche

1. Verfahren zur Bearbeitung und Behandlung eines Werkstückes,
- bei dem das durch einen mehrachsigen Industrieroboter (2) mittels einer Greifeinrichtung (3) aus einer Bereitstellungsanordnung (4) einer Bearbeitungsmaschine (5) zugeführte Werkstück (1) unter Verbleib an der Greifeinrichtung (3) während der Bearbeitung in Position gehalten wird, wobei
- der Roboter (2) während der Bearbeitung relativ zur Bearbeitungsmaschine (5) über eine zwischen der Greifeinrichtung (3) und einer Positionier-Vorrichtung (6) wirksamen Zapfen-/Bohrungs-Paarung fixiert ist,
**dadurch gekennzeichnet,**
- **daß** das Werkstück (1) relativ zur Greifeinrichtung (3) über an einer Grundplatte (7) angeordnete, mit Paßeinrichtungen (8) des Werkstückes (1) zusammenwirkende Haltemittel (9, 14) positioniert wird, und
- **daß** die Greifeinrichtung (3) mit ersten Elementen (10) einer Schiebepassungs-Paarung über zweite, korrespondierende Elemente (11) der Schiebepassungs-Paarung in der Positionier-Vorrichtung (6) positioniert wird, wobei
- zur Fixierung des Industrieroboters (2) die das Werkstück (1) tragende Greifeinrichtung (3) in Schiebepassungs-Richtung während jeder Bearbeitung in einer aus Industrieroboter (2), Bearbeitungsmaschine (5) und Positionier-Vorrichtung (6) gebildeten Bearbeitungsstation (12) spielfrei gegen einen passungsnahen Anschlag (13) der Positioner-Vorrichtung (6) gehalten wird.

2. Verfahren nach Anspruch 1, **gekennzeichnet durch** eine spanabhebende Bearbeitung des Werkstückes (1), insbesondere Bohren, Senken, Gewindebohren, Reiben etc. und/oder eine Werkstückbehandlung, insbesondere Waschen, Spülen, Freiblasen etc.

3. Bearbeitungsstation zur Durchführung des Verfahrens nach Anspruch 1 oder 2,
- umfassend einen Industrieroboter (2) mit einer Greifeinrichtung (3) für ein Werkstück (1) und eine Bearbeitungsmaschine (5) für das Werkstück (1), sowie
- eine Positionier-Vorrichtung (6) für das Werkstück (1) in/an der Bearbeitungsmaschine (5),
**dadurch gekennzeichnet,**
- **dass** die Greifeinrichtung (3) an einer Grundplatte (7)angeordnete, in Hilfs-Passbohrungen (8) des Werkstückes (1) zur Klemmhalterung einführbare Spannzangen (14) als gesteuert betätigte Haltemittel (9) umfasst, wobei an der Grundplatte (7) angeordnete Distanzstücke (15) der beabstandeten Halterung des Werkstückes (1) dienen,
- **dass** die Greifeinrichtung (3) erste, als Passbuchsen (10) gestaltete Elemente einer Schiebepassungs-Paarung aufweist und
- **dass** die Positionier-Vorrichtung (6) zweite, Korrespondierende und als Pass-Zapfen (11) gestaltete Elemente der Schiebepassungs-Paarung und einen passungsnahen Anschlag (13) aufweist.

4. Bearbeitungsstation nach Anspruch 3, **dadurch gekennzeichnet,**
- **daß** die Greifeinrichtung (3) mit an der Grundplatte (7) dem Werkstück (1) benachbart angeordneten Anschlagplatten (16) ausgerüstet ist, wobei Paßbuchsen (10) der Schiebepassungs-Paarung in den Schmal- und Breitseiten (17, 18) der Anschlagplatten (16) entsprechend den unterschiedlichen Bearbeitungsrichtungen zueinander quergerichtet angeordnet sind.

5. Bearbeitungsstation nach Anspruch 3 oder 4, **dadurch gekennzeichnet, daß** an der Grundplatte (7) eines im wesentlichen quaderartigen Werkstückes (1) stirnseitig benachbart angeordnete Anschlagplatten (16) Ausnehmungen (19) aufweisen für eine stimseitige Bearbeitung des Werkstückes (1).

6. Bearbeitungsstation nach den Ansprüchen 3 bis 5, **dadurch gekennzeichnet,**
- **daß** die Bearbeitungsmaschine (5) aus einer ortsfest angeordneten Trägerplatte (20) für entsprechend einem vorbestimmten Bearbeitungsbild fest angeordnete, gesonderte Bearbeitungseinheiten (21) gebildet ist mit einzeln betreibbaren Werkzeugspindeln (22), wobei
- die Trägerplatte (20) mit quer angeordneten Stützplatten (23) mit an den freien Stirnseiten vorgesehenen Anschlägen (13) für die schmal- und/oder breitseitig anschlagenden Anschlagplatten (16) der Greifeinrichtung (3) ausgerüstet ist, und
- mit an den Stützplatten (23) angeordneten Paß-Zapfen (11) der Schiebepassungs-Paarung die Positionier-Vorrichtung (6) und die Bearbeitungsmaschine (5) eine Einheit bilden.

7. Bearbeitungsstation nach den Ansprüchen 3 bis 6, **dadurch gekennzeichnet, daß** das Werkstück (1) in einer Bereitstellungsanordnung (4) über die mit den Spannzangen (14) zusammenwirkenden Hilfs-Paßbohrungen (8) lagegenau positioniert ist.

## Claims

1. A method of processing and treating a workpiece,
- wherein the workpiece (1) supplied to a processing machine (5) from a stand-by arrangement (4) by a multi-axis industrial robot (2) using a gripper (3) is held in position during processing while remaining on the gripper (3), wherein
- during processing the robot (2) is fixed relative to the processing machine (5) via a pin/bore combination operative between the gripper (3) and a positioning device (6),
**characterised in that**
- the workpiece (1) is positioned relative to the gripper (3) via retaining means (9, 14) disposed on a baseplate (7) and co-operating with adjusting means (8) on the workpiece (1) and
- the gripper (3) is positioned in the positioning device (6) by first elements (10) of a sliding and adjusting combination via second corresponding elements (11) of the sliding and adjusting combination, wherein
- in order to fix the industrial robot (2), during each processing operation the gripper (3) holding the workpiece (1) is held in the direction of sliding and adjustment without clearance relative to a stop (13) on the positioning device (6) near an adjustment place, in a processing station (12) made up of the industrial robot (2), the processing machine (5) and the positioning device (6).

2. A method according to claim 1, **characterised by** processing of the workpiece (1) by metal cutting, especially drilling, countersinking, tapping, friction or the like and/or by treatment of the workpiece, especially washing, rinsing, blowing free etc.

3. A processing station for working the method according to claim 1 or 2,
- comprising an industrial robot (2) with a gripper (3) for a workpiece (1) and a processing machine (5) for the workpiece (1), and
- a device (6) for positioning the workpiece (1) in/on the processing machine (5),
**characterised in that**
- the gripper (3) comprises retaining means (9) actuated in controlled manner and in the form of collet chucks (14) disposed on a baseplate (7) and insertable into auxiliary adjusting bores (8) for clamping and holding the workpiece (1), wherein spacer members (15) disposed on the baseplate (7) are used for holding the workpiece (1) at a spacing,
- the gripper (3) comprises first elements of a sliding and adjusting combination in the form of adjusting sleeves (10) and
- the positioning device (6) comprises second corresponding elements of the sliding and adjusting combination in the form of adjusting pins (11) and also comprises a stop (13) near an adjusting place.

4. A processing station according to claim 3, **characterised in that**
- the gripper (3) is equipped with stop plates (16) disposed near the baseplate (7) of the workpiece (1 ) wherein adjustment sleeves (10) of the sliding and adjustment combination are disposed in the narrow and wide sides (17, 18) of the stop plates (16) and are aligned transversely of one another corresponding to the different directions of processing.

5. A processing station according to claim 3 or claim 4, **characterised in that** stop plates (16) disposed near the ends of the baseplate (7) of a substantially cuboid workpiece (1) have recesses (19) for processing the workpiece (1) on one side.

6. A processing station according to claims 3 to 5, **characterised in that**
- the processing machine (5) comprises a stationary carrier plate (20) for separate processing units (21) fixed in accordance with a predetermined processing configuration and with individual drivable tool spindles (22), wherein
- the carrier plate (20) is equipped with transversely disposed supporting plates (23) with stops (13) provided at the free endfaces for the stop plates (16) of the gripper (3) which abut the narrow and/or wide side, and
- the positioning device (6) and the processing machine (5) form a unit in co-operation with adjusting pins (11) on the sliding and adjusting combination disposed on the supporting plates (23).

7. A processing station according to claims 3 to 6, **characterised in that** the workpiece (1) is accurately positioned in a standby arrangement (4) via auxiliary adjusting bores (8) co-operating with the collet chucks (14).

## Revendications

1. Procédé d'usinage et de manipulation d'une pièce, selon lequel :
- la pièce (1) prélevée d'un système de mise à disposition (4) d'une machine (5) d'usinage par un robot industriel à plusieurs axes (2) utilisant un dispositif de prise (3), est maintenue en position pendant l'usinage, tout en restant sur le dispositif de prise (3), et
- pendant l'usinage, le robot (2) est fixé par rapport à la machine d'usinage (5) par l'intermédiaire d'un accouplement broche-alésage intervenant entre le dispositif de prise (3) et un dispositif de positionnement (6),
**caractérisé en ce que**
- la pièce (1) est positionnée par rapport au dispositif de prise (3), par des moyens de maintien (9, 14) montés sur une plaque de base (7) et coopèrant avec des dispositifs d'ajustage (8) de la pièce (1), et
- le dispositif de prise (3) portant des premiers éléments (10) d'un accouplement d'ajustage coulissant est positionné dans le dispositif de positionnement (6) par l'intermédiaire de seconds éléments correspondants (11) de l'accouplement d'ajustage coulissant, alors que
- pour fixer le robot industriel (2), pendant chaque usinage effectué dans un poste d'usinage (12) composé des plaques de butée (16), du robot (2) de la machine d'usinage (5) et du dispositif de positionnement (6), le dispositif de prise (3) portant la pièce (1) est maintenu sans jeu dans la direction de l'ajustage coulissant contre une butée (13) proche de l'ajustage, et portée par le dispositif de positionnement (6).

2. Procédé selon la revendication 1,
**caractérisé en ce que**
l'usinage de la pièce (1) est un enlèvement de matière, en particulier un perçage, un fonçage, un taraudage, un alésage etc. et/ou un traitement de la pièce, en particulier un lavage, un rinçage, un soufflage, etc.

3. Poste d'usinage pour la mise en oeuvre du procédé selon la revendication 1 ou 2, comprenant :
- un robot industriel (2) équipé d'un dispositif de prise (3) pour saisir une pièce (1),
- une machine d'usinage (5) de la pièce (1), ainsi qu'
- un dispositif de positionnement (6) de cette pièce sur ou dans la machine d'usinage (5),
**caractérisé en ce que**
- le dispositif de prise (3) comprend, comme moyens de maintien (9) actionnables par une commande, des prises de serrage (14) montées sur une plaque de base (7) et qui pour assurer le maintien par serrage peuvent être introduites dans des alésages auxiliaires d'ajustage (8) de l'outil (1), des espaceurs (15) montés sur la plaque de base (7) servant à maintenir la pièce (1) à une distance appropriée,
- le dispositif de prise (3) porte des premiers éléments constitués par des douilles d'ajustage (10) d'un accouplement d'ajustage coulissant, et
- le dispositif de positionnement (6) porte des seconds éléments correspondants de l'accouplement d'ajustage coulissant, constitués par des broches d'ajustage (11), ainsi qu'une butée (13) proche de l'ajustage.

4. Poste d'usinage selon la revendication 3,
**caractérisé en ce que**
le dispositif de prise (3) est équipé de plaques de butée (16) montées sur la plaque de base (7) près de la pièce (1), et
des douilles d'ajustage (10) de l'accouplement d'ajustage coulissant sont montées perpendiculairement entre elles dans les côtés étroits (17) et larges (18) de ces plaques de butée (16), en correspondance avec les diverses directions d'usinage.

5. Poste d'usinage selon la revendication 3 ou 4,
**caractérisé en ce que**
les plaques de butée (16) montées proches du côté frontal sur la plaque de base (7) d'une pièce essentiellement parallélépipédique (1) présente des évidements (19) permettant un usinage frontal de la pièce (1).

6. Poste d'usinage selon l'une quelconque des revendications 3 à 5,
**caractérisé en ce que**
- la machine d'usinage (5) est composée d'une plaque support (20) fixe accueillant des unités d'usinage (21) spéciales, disposées fixement sur la plaque selon une image d'usinage définie à l'avance et équipées de broches à outil (22) entraînables individuellement,
- la plaque support (20) est équipée de plaques de soutien (23) montées perpendiculairement avec sur leurs faces frontales libres, des butées (13) pour les plaques de butée (16) du dispositif de prise (3), venant en butée du côté étroit et/ou du côté large, et
- avec des broches d'ajustage (11) montées sur les plaques de soutien (23) et appartenant à l'accouplement d'ajustage coulissant, le dispositif de positionnement (6) et la machine d'usinage (5) forment une unité.

7. Poste d'usinage selon l'une quelconque des revendications 3 à 6,
**caractérisé en ce que**
la pièce (1) est positionnée avec précision dans le système de mise à disposition (4) par l'intermédiaire des alésages d'ajustage auxiliaires (8) coopérant avec les pinces de serrage (14).
